# EUROPÄISCHE PATENTSCHRIFT

(11) **EP 1 904 754 B1**
(45) Veröffentlichungstag und Bekanntmachung des Hinweises auf die Patenterteilung: **19.10.2011**
(21) Anmeldenummer: 06754601.0
(22) Anmeldetag: 28.06.2006
(51) Int. Cl.: F16C 39/06

(54) **VERFAHREN ZUM BETREIBEN EINES ELEKTROMOTORISCHEN ANTRIEBS**
METHOD FOR OPERATING AN ELECTROMOTIVE DRIVE
PROCEDE POUR FAIRE FONCTIONNER UN ENTRAINEMENT A MOTEUR ELECTRIQUE

(30) Priorität: 09.07.2005 DE 102005032184
(43) Veröffentlichungstag der Anmeldung: 02.04.2008
(73) Patentinhaber: Oerlikon Textile GmbH & Co. KG, 42897 Remscheid (DE)
(72) Erfinder: COENEN, Norbert, 41199 Mönchengladbach (DE); LINKE, Marco, 49744 Geeste (DE)
(74) Vertreter: Hamann, Arndt
(86) Internationale Anmeldenummer: PCT/EP2006/006228
(87) Internationale Veröffentlichungsnummer: WO 2007/006420

(56) Entgegenhaltungen:
- EP-A1- 1 154 340
- US-B1- 6 353 273

## Beschreibung

Die vorliegende Erfindung betrifft ein Verfahren zum Betreiben eines elektromotorischen Antriebs nach dem Oberbegriff des Anspruchs 1 sowie einen elektromotorischen Antrieb nach dem Oberbegriff des Anspruchs 14.

Bei der Verwendung eines berührungslos gelagerten Rotors, der als mit hoher Drehzahl umlaufender Läufer eines elektromotorischen Antriebs ausgebildet ist, ist es von besonderem Interesse, das Berühren von Fanglagern durch den Rotor auf Grund von auf diesen einwirkenden äußeren Prozess- und Störkräften zu verhindern. Das Berühren der Fanglager durch den Rotor birgt das Risiko, dass die frei werdende kinetische Energie des Rotors zu einem vorzeitigen Verschleiß der Fanglager bis hin zur mechanischen Zerstörung der Fanglager und/oder der gesamten inneren Antriebsbaugruppe führt.

Die Kenntnis des Abstandes der Lagerluftspalte ist insbesondere bei auftretenden Prozess- und Störkräften sinnvoll, um rechtzeitig vor der Berührung von Rotor und Fanglager eine Abschaltung des elektromotorischen Antriebs einzuleiten. Eine derartige Störkraft kann bei Rotoren, die beispielsweise für Textilmaschinen eingesetzt werden, aus einer sich am Schaft des Rotors zwischen den Lagermagneten ablagernden Fadenansammlung resultieren, die eine axial gerichtete Kraft auf den Rotor ausübt und diesen aus den im stationären Betrieb auftretenden kräftefreien Schwebezustand in Richtung eines der Fanglager verschiebt. Dieser Störkraft wird durch eine entsprechende Ansteuerung einer Regeleinrichtung entgegengewirkt, mit der Folge, dass bei Unkenntnis des verbleibenden Lagerluftspaltes der Rotor gegen eines der Fanglager gedrückt werden kann, was die Beschädigung des Antriebs zur Folge haben kann.

Aus der Offenlegungsschrift DE 35 23 344 A1 ist bekannt, zur Bestimmung des Lagerluftspaltes eines berührungslos gelagerten Rotors eines elektromotorischen Antriebs absolut messende Spaltsensoren zu verwenden, die in der Lage sind, Spaltabweichungen von etwa 1 % des Nennwertes durch ein elektrisches Signal verzögerungsfrei und messtechnisch genau abzubilden. Die Verwendung von absolut messenden Spaltsensoren gestaltet sich insofern als nachteilig, da absolut messende Spaltsensoren mit einem kleinen Offsetfehler und einer sehr hohen Messgenauigkeit kostenintensiv sind und einen hohen Justageaufwand erfordern. Der stets vorhandene Offsetfehler der Spaltsensoren bewirkt, dass der Rotor aus seinem kräftefreien Schwebezustand verschoben wird. Daraus resultiert ein ständig fließender Strom zur Kompensation des Offsetfehlers.

Die Verwendung von kostengünstigeren Spaltsensoren geht mit dem Nachteil einher, dass diese einen größeren Offsetfehler aufweisen. Zum einen fließt bei großen Offsetfehlern der Spaltsensoren ein sehr großer Strom, der unter Umständen die Leistungsgrenzen der Regeleinrichtung überschreiten kann. Zum anderen erfolgt eine Lageverschiebung des Rotors aus seinem kräftefreien Schwebezustand, so dass es zu einer starken Annäherung an die Fanglager oder im Extremfall bereits zu einer Berührung kommen kann.

Aufgabe der vorliegenden Erfindung ist es daher, ein Verfahren zum Betreiben eines elektromotorischen Antriebes bereitzustellen, das in einfacher und kostengünstiger Weise die Bestimmung und Überwachung des Lagerluftspaltes während des stationären Betriebs ermöglicht, sowie einen elektromotorischen Antrieb, der sich durch eine erhöhte Betriebssicherheit auszeichnet.

Die Aufgabe wird verfahrensseitig durch die kennzeichnenden Merkmale des Anspruchs 1 und hinsichtlich des elektromotorischen Antriebes durch die kennzeichnenden Merkmale des Anspruchs 14 gelöst.

Während des Betriebes erfolgt das Einlesen eines von der Regeleinrichtung zur Aufrechterhaltung des kräftefreien Schwebezustands erzeugten Ausgangssignals. Die Berechnung des Lagerluftspaltes erfolgt dabei durch die Bewertung des. Ausgangssignals. Die aus der Bewertung des Ausgangssignals ermittelten Werte für den Lagerluftspalt werden mit den eingangs festgelegten Grenzwerten verglichen. Bei Passieren der festgelegten Grenzwerte für den Lagerluftspalt erfolgt die Abschaltung des elektromotorischen Antriebes, wodurch eine Beschädigung der Fanglager oder der gesamten inneren Antriebsbaugruppe weitgehend vermieden werden kann.

Die erfolgte Abschaltung auf Grund des Passierens der Grenzwerte des Lagerluftspaltes kann durch geeignete Mittel aufgezeichnet und angezeigt werden, wodurch eine Analyse des Abschaltverhaltens des elektromotorischen Antriebs ermöglicht wird.

Der wesentliche Vorteil des erfindungsgemäßen Verfahrens liegt darin, dass auftretende Stör- oder Prozesskräfte, die eine axial gerichtete Kraft auf den Rotor ausüben, und diesen somit aus seiner kräftefreien Schwebeposition (neutrale Position) verschieben, durch eine entsprechende Ansteuerung der Regeleinrichtung bis zu dem Zeitpunkt kompensiert werden können, in dem die initial festgelegten Grenzwerte des Abstands des Lagerluftspaltes passiert werden, was zur Abschaltung des elektromotorischen Antriebs führt, und somit zu einer Erhöhung der Betriebssicherheit beiträgt.

Des Weiteren können nach dem erfindungsgemäßen Verfahren vor jedem Hochlauf des elektromotorischen Antriebs zur Festlegung von vorgebbaren Grenzwerten die Lageranschläge zur Bestimmung der Extremwerte des Lagerluftspaltes vermessen werden. Hierbei tastet der Rotor die Endanschläge der Fanglager ab, was durch eine geeignete Ansteuerung des Rotors über die Regeleinrichtung erreicht werden kann. Zum Zeitpunkt der Initialisierung gehen die äußeren Prozesskräfte, die auf den Rotor einwirken, gegen Null, da der Motor zum Zeitpunkt der Initialisierung nicht angetrieben wird, sodass sich das von der Regeleinrichtung zur Aufrechterhaltung des kräftefreien Schwebezustands erzeugte Ausgangssignal (ASI) ausschließlich aus der negativen Steifigkeit von zur berührungslosen Lagerung des Rotors verwendeten Lagermitteln bestimmt. Damit liegen die Extremwerte der Lageranschläge fest. Die vor jedem Hochlaufen des elektromotorischen Antriebs erneut.bestimmten Extremwerte sowie die Berechnung der Lagerluftspalte ermöglicht bei geeigneter Aufzeichnung der ermittelten Werte eine Analyse des Betriebsverhaltens des elektromotorischen Antriebs.

Dabei können die vorgebbaren Grenzwerte unterhalb der initial bestimmten Extremwerte festgelegt werden. Auf diese Weise kann sichergestellt werden, dass im Fall einer Abschaltung bis zum Zeitpunkt der Abschaltung ein ausreichender Sicherheitsabstand zu den Fanglagern gewahrt wird. Hierzu kann der Grenzwert aus der Differenz der anhand der gemessenen Extermwerte erhaltenen Größe des Lagerluftspaltes und einem vorgebbaren Abschlag zur Erhöhung der Betriebssicherheit, beispielsweise bis zu einem Drittel der Größe des Lagerluftspaltes, festgelegt werden.

Des Weiteren kann nach jeder erfolgten Abschaltung des elektromotorischen Antriebs die Vermessung der Lageranschläge vor dem Wiederanlauf des elektromotorischen Antriebs durchgeführt werden. Auf diese Weise werden mit dem beschriebenen Verfahren bei jedem Startvorgang die Lagerluftspaltgrenzwerte erneut individuell festgelegt. Zudem werden damit die stets vorhandenen Offsetfehler durch die Regeleinrichtung kompensiert. Die stets erfolgende Neufestlegung der Grenzwerte kann als Diagnosewerkzeug hinsichtlich der Abnutzung der Fanglager und/oder der Lagermittelzustandsbewertung dienen, indem die zur Grenzwertbestimmung gemessenen Extremwerte aufgezeichnet werden. Die Veränderung der Extremwerte, beispielsweise auf Grund von Fanglagerabnutzung, lässt Rückschlüsse auf den Zustand der verwendeten Lagermittel und insbesondere der Fanglager zu.

Vorteilhafterweise ist vorsehbar dass vor dem Hochlauf des Rotors ein Referenzwert eines Arbeitspunktes des im Schwebezustand befindlichen Rotors festgelegt werden kann, sodass ein sich während des stationären Betriebs einstellender, von diesem Referenzwert.abweichender Arbeitspunkt feststellbar wird. Dadurch kann erreicht werden, dass eine sich einstellende Schwächung der zur berührungslosen Lagerung verwendeten Lagermittel feststellbar wird, die im Zuge der Alterung des Antriebs auftreten kann. Hierzu ist vorgesehen, dass der Referenzwert aus dem Mittelwert des Abstandes des Rotors zu den Fanglagern bestimmt werden kann. Diese Vorgehensweise ermöglicht die Beurteilung des Zustandes der Lagermittel während des laufenden Betriebs.

Insbesondere kann der Referenzwert des Arbeitspunktes des im Schwebezustand befindlichen Rotors neu festgelegt werden, wenn der Rotor seine Betriebsdrehzahl erreicht hat. Auf diese Weise werden die mit Erreichen der Betriebsdrehzahl auftretenden Prozesskräfte, die zu einer Arbeitspunktverschiebung führen können, berücksichtigt, ohne dass die prozesskräftebedingte Abweichung vom Arbeitspunkt beim Erreichen der Betriebsdrehzahl zu einer Abschaltung des elektromotorischen Antriebes führt.

Weiterhin kann durch eine definierte Abweichung des sich einstellenden Arbeitspunktes vom Referenzwert die Abschaltung des elektromotorischen Antriebs bewirkt werden, um eine Schädigung der Fanglager oder der gesamten inneren Antriebsbaugruppe auszuschließen. Darüber hinaus kann vorgesehen sein, dass die Abweichung des sich einstellenden Arbeitspunktes vom Referenzwert in geeigneter Weise signalisiert wird, um frühzeitig auf derartige Verschleißerscheinungen aufmerksam machen zu können.

Vorteilhafterweise kann das Ausgangssignal (ASI) für kleine Lagerluftspalte linearisiert werden, wodurch der aus dem linearisierbaren Ausgangssignal (ASI) berechnete Lagerluftspaltwert als Qualitätskriterium bei der Fanglagereinstellung verwendbar wird.

Des Weiteren kann die Regeleinrichtung zur.Auswertung des Ausgangssignals (ASI) mit einer Steueranordnung in Wirkverbindung stehen. Dabei kann zur Verstärkung des Ausgangssignals (ASI) die Steueranordnung einen Verstärker aufweisen. Dieser kann dazu verwendet werden, insbesondere bei geringen Differenzen zwischen den Positionen des Rotors, das zur Überwachung des Lagerluftspaltes abzugreifende Signal zu verstärkern, wobei der Verstärker den Pegel des Ausgangssignals (ASI) verschieben kann. Das so verstärkte Ausgangssignals (ASI) der Regeleinrichtung liegt in einem messtechnisch sinnvollen Bereich, sodass eine hinreichend hohe Auflösung des Ausgangssignals (ASI) der Regeleinrichtung erzielt wird, um die zur Überwachung erforderliche Messgenauigkeit zu erreichen. Insbesondere kann der Eingang des Verstärkers mit einem zusätzlichen, pulsweitenmodulierten Signal beaufschlagt werden, welches durch die Steueranordnung erzeugt wird. Dieses zusätzliche, pulsweitenmodulierte Signal dient der Kompensation des Offsets des Lagesensors, welcher in das Ausgangssignal (ASI) eingeht. Der Offset entspricht der Kompensationsspannung der Offsetkorrektur des Lagesensors. Dabei handelt es sich im Wesentlichen um den Basisoffsetfehler der Regeleinrichtung.

Außerdem kann die zusätzlich auftretende Temperaturdrift kompensiert werden. Hierzu kann während des Übergangs des Betriebszustands des elektromotorischen Antriebs vom Zeitpunkt des Hochlaufens bis zum Erreichen des stationären Betriebszustandes zur Kompensation der auftretenden Abweichungen von der Gleichgewichtslage im Schwebezustand des Rotors die Pulsweitenmodulation des zusätzlichen Signals verändert werden, derart, dass das zusätzliche, pulsweitenmodulierte Signal zeitlich verzögert in die Steueranordnung kompensierend eingreift. Auf diese Weise wird eine auf Grund von Temperaturänderungen auftretende Drift beim Hochlaufen des Rotors bis zum Erreichen der Betriebstemperatur im stationären Betrieb, die eine Verschiebung der neutralen Position und des Offsetfehlers der Regeleinrichtung zur Folge hat, zeitlich verzögert kompensiert. Treten beispielsweise störungsbedingt axiale Kräfte auf, die das Passieren eines der Grenzwertes bewirken, so werden diese trotz der Kompensation der Temperaturdrift erkannt, weil sich diese Störkräfte zeitlich schneller auswirken, als die zeitlich verzögerte Kompensation wirksam wird.

Gemäß Anspruch 14 umfasst die Regeleinrichtung einen Lagesensor mit mindestens einer Sensorspule, mindestens eine definiert bestrombare Aktorspule, einen Lageregler und einen Integrator, an dem das Ausgangssignal (ASI) zur Auswertung und Berechnung des Lagerluftspaltes abgreifbar ist.

Weiterhin kann die Regeleinrichtung mit einer Steueranordnung zur Auswertung und Berechnung des Ausgangssignal (ASI) verbunden sein. Die Steueranordnung kann eine digitale Steuereinheit umfassen, beispielsweise in Gestalt eines Computers oder Mikroprozessors.

Des Weiteren kann die Steueranordnung einen Verstärker, einen AnalogiDigital-Wandler sowie einen Digital/Analog-Wandler umfassen, über die die digitale Steuereinheit mit dem Regelkreis verbindbar ist. Der Verstärker ist derart ausgebildet, dass er das Ausgangssignal der Regeleinrichtung auf ein Spannungsniveau anhebt oder absenkt, das dem der Messanordnung entspricht, da die Betriebsspannungen der Regeleinrichtung einerseits und der Steueranordnung zur Auswertung des Ausgangssignal (ASI) andererseits unterschiedlich sein können. Der Analog/DigitalWandler dient der Umsetzung der analogen Signale in von der Steueranordnung verarbeitbare digitale Signale, sofern nicht bereits digitale Signale von der Regeleinrichtung bereitgestellt werden.

Weitere vorteilhafte Weiterbildungen sind den Ansprüchen 17 bis 20 zu entnehmen.

Die Erfindung soll nachstehend anhand eines Ausführungsbeispiels näher erläutert werden. Die zugehörige Zeichnung zeigt eine Prinzipdarstellung, einer Magnetlageranordnung mit einer Regeleinrichtung.

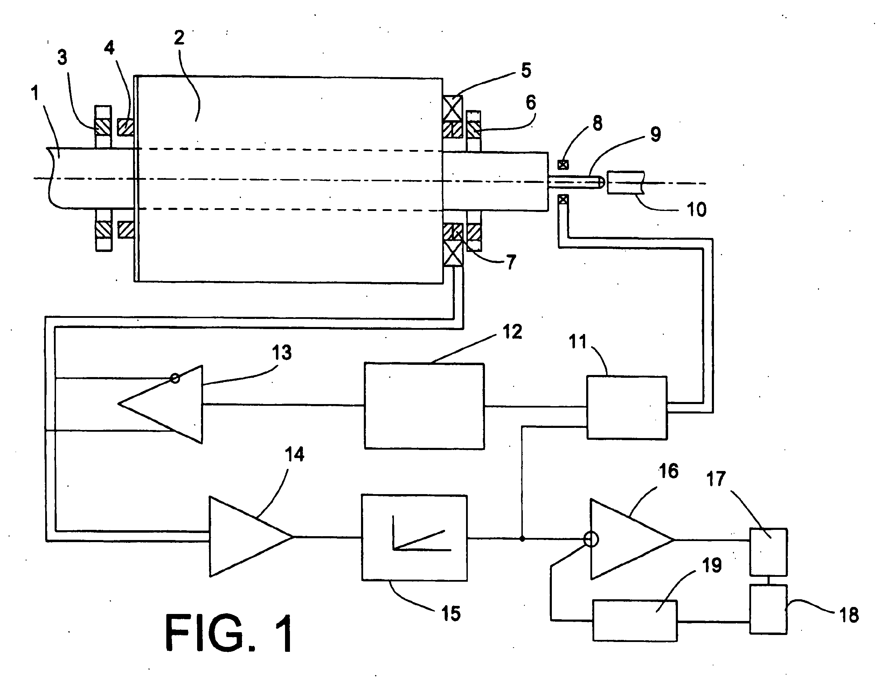

Der Darstellung in Fig. 1 ist eine Lageranordnung eines elektromotorischen Antriebs, insbesondere für eine Textilmaschine, zu entnehmen. Der elektromotorische Antrieb kann als Einzelantrieb einer Spinnvorrichtung ausgeführt sein, der als Antrieb eines berührungslos gelagerten Rotors 1 dient. Der Rotor 1 ist als Läufer des elektromotorischen Antriebs ausgebildet und in der als Magnetlageranordnung ausgeführten Lagerung in radialer und axialer Richtung berührungslos abgestützt. Die Magnetlageranordnung umfasst unter anderem als Permanentmagnete ausgeführte Lagermagnete 3, 4, 6, 7, die den Schaft des Rotors 1 axial abstützen. Zur Erzielung einer höheren Steifigkeit oder Dämpfung der Lagerung des Rotors 1 können weitere aktive oder passive Magnete vorgesehen sein. Es kommt jedoch auch die Verwendung eines Gaslagers in Kombination mit einer Magnetlageranordnung in Betracht.

Der elektromotorische Antrieb umfasst weiterhin zwei Fanglager 10 (von denen nur eines in Fig. 1 dargestellt ist), die der axialen Abstützung des Rotors 1 dienen, wenn der elektromotorische Antrieb außer Betrieb gesetzt worden ist. Vor der Inbetriebnahme des elektromotorischen Antriebs liegt der Rotor 1 an einem der Fanglager 10 auf Grund einer bauartbedingten bevorzugten Fallrichtung des Rotors 1 mit einem am Rotor 1 angeordneten Anschlag 9 an. Des Weiteren umfasst der elektromotorische Antrieb einen Stator 2, an dem das der radialen Lagerung dienende Lager, beispielsweise ein aktives Magnetlager oder Gaslager, anordnenbar ist.

Die Lagermagnete 4, 7 sind am Stator 2 angeordnet, denen in geringem-Abstand die entsprechenden Lagermagnete 3, 6 des Rotors 1 gegenüberstehen. Auf diese Weise werden Magnetpaare gebildet, die der axialen und radialen Abstützung des Rotors 1 dienen. Die aus den Lagermagneten 3, 4 und 6, 7 gebildeten Magnetpaare weisen jeweils eine derart gerichtete Polarität auf, dass der Rotor 1 durch eine geeignete Regeleinrichtung zwischen diesen in der Schwebe gehalten wird, so dass sich im stationären Betrieb zwischen den jeweiligen Magnetpaaren ein Luftspalt ausbildet. Somit befindet sich der Rotor 1 während des stationären Betriebs des elektromotorischen Antriebs in einem kräftefreien Schwebezustand, in welchem der Rotor 1 axial um einen Arbeitspunkt schwebt. Dieser kräftefreie Schwebezustand wird auch als neutrale Position des Rotors 1 bezeichnet. In der neutralen Position tritt zwischen dem Rotor 1 und den Fanglagern 10 ein im Wesentlichen gleich großer Abstand in Form eines Lagerluftspalts auf.

Die Größe des zwischen den Fanglagern 10 und dem Rotor 1 auftretenden Lagerluftspaltes ist kleiner bemessen, als die der Luftspalte zwischen den Magnetpaaren des Stators 2 und dem Rotor 1. Dies wird dadurch erreicht, dass zumindest eines der Fanglager 10 in axialer Richtung derart justierbar ist, dass die sich aus der Anordnung von Rotor 1 und Stator 2 zueinander ergebende Größe der Luftspalte in der neutralen Position des Rotors 1 zwischen den Lagermagneten 3, 4 und 6, 7 unterschritten wird. Dies bewirkt, dass sich die Lagermagneten 3, 4 und 6, 7 bei außer Betrieb befindlichem elektromotorischen Antrieb nicht berühren, wenn der Rotor 1 auf Grund seiner bevorzugten Fallrichtung mit seinem Anschlag 9 an einem der Fanglager 10 anliegt. Vorzugsweise kann auch das andere Fanglager 10 axial justiert werden.

Die Überwachung und Bestimmung des sich während des Betriebes zwischen dem Rotor 9 und den Fanglagern 10 einstellenden Lagerluftspaltes erfolgt mittels der Regeleinrichtung, die eine von der neutralen Position abweichende Lageänderung des Rotors 1 erfasst und auf dieser Basis der auftretenden Lageänderung entsprechend gegensteuert, um den kräftefreien Schwebezustand des Rotors 1 während des stationären Betriebs aufrecht zu erhalten. Derartige Lageänderungen sind insbesondere auf äußere Prozess- und Störkräfte zurückzuführen, die auf den Rotor 1 einwirken. Ebenso beeinflusst die altersbedingte Schwächung oder eine Beschädigung der Lagermagnete 3, 4, 6, 7 den Gleichgewichtszustand des Rotors 1 während des stationären Betriebs des elektromotorischen Antriebs.

Des Weiteren ist am Stator 2 mindestens eine Aktorspule 5 angeordnet, die mit der Regeleinrichtung in Wirkverbindung steht. Die Aktorspule 5 ist durch die Regeleinrichtung derart ansteuerbar, dass auftretende Abweichungen des kräftefreien Schwebezustands des Rotors 1 durch eine definierte Bestromung der Aktorspule 5 ausgeglichen werden können.

Die Regeleinrichtung weist weiterhin eine Sensorspule 8 auf, mittels derer die Lageänderungen des Rotors 1 in axialer, Richtung festgestellt und an einen die Sensorspule 8 umfassenden Lagesensor 11 weitergeleitet werden. Der Lagesensor 11 detektiert die während des stationären Betriebs des elektromotorischen Antriebs auftretende Abweichung von der neutralen Position des Rotors 1. Weiterhin umfasst die Regeleinrichtung einen Lageregler 12, einen Leistungsverstärker 13, einen Differenzverstärker 14 und einen Integrator 15. An die Regeleinrichtung schließt sich über eine Verbindungsleitung eine Steueranordnung an, die einen verstärker,16, einen Analog/Digital-Wandler 17, eine digitale Steuereinheit 18 sowie einen Digital/Analog-Wandler 19 umfasst. Die digitale Steuereinheit 18 kann als ein Mikroprozessor oder als ein Computer ausgeführt sein.

Das erfindungsgemäße Verfahren sieht vor, dass vor der Inbetriebnahme des elektromotorischen Antriebs zunächst die Regeleinrichtung und die Steueranordnung aktiviert werden. Eine mittels der digitalen Steuereinheit 18 verwendbare Software triggert einen Prozess an, der veranlasst, dass die Aktorspule 5 mit einem definierten Strom beaufschlagt wird, sodass sich der Rotor 1 jeweils einmal auf die Lagermagnete 4 und 7 des Stators 2 zu bewegt. Dabei stößt der Rotor 1 entsprechend seiner Bewegungsrichtung an das jeweilige Fanglager 10 an, beziehungsweise erreicht eine von dem anderen Fanglager 10 maximal beabstandete Position. Dies dient der Festlegung der Extremwerte der Lageranschläge.

Mit dem Erreichen des stationären Betriebszustands des elektromotorischen Antriebs, in welchem sich der Rotor 1 im kräftefreien Schwebezustand befindet, werden äußere Prozess- und Störkräfte, die den Schwebezustand beeinflussen können, durch die Regeleinrichtung kompensiert. Dabei erfasst der Lagesensor 11. wie durch äußere Prozess- und Störkräfte hervorgerufenen, mittels der Sensorspule 8 festgestellten Abweichungen bezüglich der neutralen Position. Das Ausgangssignal (ASLS) des Lagesensors 11 wird an den Lageregler 12 weitergeleitet, der den Strom zur Ansteuerung der Aktorspule 5 derart verändert, dass eine die äußere Prozesskraft kompensierende Reaktionskraft erzeugt wird. Die Reaktionskraft bewirkt die Rückführung des Rotors 1 in seine neutrale Position. Dem Lageregler 12 ist der Leistungsverstärker 13 nachgeschaltet, um das Ausgangssignal (ASLR) des Lagereglers 12 zu verstärken.

Der parallel zum Lageregler 12 geschaltete Integrator 15 integriert das stromproportionale Ausgangssignal (ASLR) des Lagereglers 12, wobei die Addition des Ausgangssignals (ASI) des Integrators 15 auf das Ausgangssignal (ASLS) des Lagesensors 11 zu einer Verschiebung des Rotors 1 aus seiner ursprünglich neutralen Position führt, bis der durch das Ausgangssignal (ASLS) des Lagesensors 11 hervorgerufene Aktorspulenstrom durch das Ausgangssignal (ASI) des Integrators 15 kompensiert wurde. Es handelt sich dabei um eine so genannte Nullstromregelung, die der Regelung durch den Lageregler 12 überlagert ist. Hierbei wird das Ausgangssignal (ASLR) des Lagereglers 12 über den Differenzverstärker 14 dem Integrator 15 zugeführt. Das Ausgangssignal (ASI) des Integrators 15 wird zur Kompensation des Offsetfehlers des Lagesensors 11 an diesen weitergeleitet.

Erfindungsgemäß wird durch das Ausgangssignal (ASI) des Integrators 15 das jeweils anliegende Ausgangssignal (ASLS) des Lagesensors 11 bis zum Erreichen der neutralen Position des Rotors 1 kompensiert. Dadurch kann das Ausgangssignal (ASI) des Integrators 15 als Messwert für die Abweichung des Rotors 1 von der neutralen Position herangezogen werden. Die Amplitude des Ausgangssignals (ASI) des Integrators 15 steht in einem festen Verhältnis zum Ausgangssignal (ASLS) des Lagesensors 11, jedoch mit umgekehrten Vorzeichen. Durch die vor Inbetriebnahme des elektromotorischen Antriebs erfolgte Bestimmung der Extremwerte der Fanglageranschläge ist es in Verbindung mit dem für kleine Lagerluftspalte linearisierbaren Ausgangssignal (ASI) des Integrators 15 möglich, die Größe des Lagerluftspaltes zu bestimmen und dessen Änderungen zu überwachen.

Zur Bestimmung und Überwachung der Änderung des Lagerluftspaltes wird das Ausgangssignal (ASI) des Integrators 15 über den Verstärker 16 und den Analog/Digital-Wandler 17 an die digitale Steuereinheit 18 weitergeleitet. Die digitale Steuereinheit 18 ist zur Verarbeitung eines geeigneten Algorithmus' ausgeführt, der unter anderem die Hinterlegung der vor Inbetriebnahme des elektromotorischen Antriebs bestimmten Extremwerte und die Überwachung und Bewertung des Ausgangssignals (ASI) des Integrators 15 ermöglicht. Somit werden zur Bestimmung des Lagerluftspaltes die Werte des Ausgangssignals (ASI) des Integrators 15 mit initial festgelegten Grenzwerten verglichen, die entsprechend der Ausführung der Magnetlageranordnung hinterlegbar sind.

Die Kenntnis der eingangs bestimmten Extremwerte in Verbindung mit dem Ausgangssignal (ASI) des Integrators 15 ermöglicht die Überwachung des Lagerluftspaltes und dessen Berechnung. Die Vorgabe der Grenzwerte kann unter Berücksichtigung einer Notfallabschaltung des elektromotorischen Antriebs dahingehend erfolgen, dass ein Sicherheitsabschlag, beispielsweise bis zu einem Drittel des Lagerluftspaltes, vorgesehen wird. Die Grenzwerte bestimmen sich aus der Differenz des auf Grund der Extremwerte gemessenen Lagerluftspaltes und des Sicherheitsabschlages. Das heißt, bei Passieren der Grenzwerte erfolgt die Abschaltung des elektromotorischen Antriebs und zugleich kann eine Anzeige dieser Situation initiiert werden, die beispielsweise in akustischer oder optischer Form erfolgen kann.

Zudem ermöglicht das erfindungsgemäße Verfahren die Bewertung des Zustands der Magnetlageranordnung. Zu den Faktoren, die den Zustand der Magnetlageranordnung beeinflussen, zählt vor allem die altersbedingte Schwächung der Lagermagnete 3, 4, 6, 7, die zu einer Arbeitspunktverschiebung des Rotors 1 führen kann und der nicht vollständig auszuschließende Verschleiß der Fanglager 10 bei Notfallabschaltungen. Um die Zustandsbewertung durchführen zu können, werden Referenzwerte festgelegt, die sich aus den Mittelwerten der Messwerte des vorderen und hinteren Fanglagerabstandes ergeben und derart hinterlegbar sind, dass sie bei der Überwachung und Bewertung des Ausgangssignals (ASI) des Integrators 15 abrufbar sind. Auch in diesem Fall ist vorsehbar, bei Passieren des hinterlegten Referenzwertes den elektromotorischen Antrieb abzuschalten. Darüber hinaus kann auch die Anzeige und Speicherung der unterhalb des Referenzwertes liegenden Werte vorgesehen sein, um eine sich langfristig abzeichnende Beschädigung der Magnetlageranordnung aufzeigen zu können.

Wie bereits beschrieben, regelt das Ausgangssignal (ASI) des Integrators 15 durch die Kompensation des Offsetfehlers des Lagesensors 11 den sich an der Aktorspule 5 einstellenden Strom gegen Null. Die Veränderung des Ausgangssignals (ASI) des Integrators 15 gibt dabei die Abweichung der Position des Rotors 1 wieder. Die auftretenden Abweichungen der Position des Rotors 1 gegenüber der neutralen Position sind in dem beschriebenen Ausführungsbeispiel sehr gering. Entsprechendes gilt auch für die Veränderung des Ausgangssignals (ASI) des Integrators 15. Vorzugsweise wird zu einer geeigneten Auswertung des Ausgangssignals (ASI) des Integrators 15 dieses durch den Verstärker 16 entsprechend verstärkt, um einen messtechnisch sinnvollen Bereich des der digitalen Steuereinheit 18 vorgeschalteten Analog/Digital-Wandlers 17 anzusprechen. Ein Verzicht auf den Verstärker 16 hätte eine derart geringe Auflösung des Ausgangssignals (ASI) zur Folge, dass hierdurch die zur Überwachung des Lagerluftspaltes erforderliche Messgenauigkeit nur ungenügend gegeben wäre.

Auf den stets vorhandenen Offset des Ausgangssignals (ASI) des Integrators 15 zur Kompensation des Offsets des Lagesensors 11, der am Eingang des Verstärkers 16 anliegt, wird zusätzlich das Ausgangssignal des Digital/Analog-Wandlers 19 aufaddiert. Hierdurch wird das Ausgangssignal des Verstärkers 16 so verschoben, dass dieses im messtechnisch sinnvollen Bereich der digitalen Steuereinheit. 18 liegt. Der Digital/Analog-Wandler 19 wird im Ausführungsbeispiel durch einen Tiefpass in Verbindung mit einer Pulsweitenmodulation am Ausgang der digitalen Steuereinheit 18 gebildet..

Aufgabe des Verstärkers 16 ist es, wie bereits beschrieben, das Ausgangssignal (ASI) des Integrators 15 derart zu verstärken, dass es in einem messtechnisch sinnvollen Bereich liegt. Jedoch tritt beim Hochlaufen des elektromotorischen Antriebs bis zum Erreichen der Betriebstemperatur im stationären Betriebszustand eine Drift des Ausgangssignals (ASLS) des Lagesensors 11 auf. Diese Signaldrift wird durch die Temperaturdrift des Lagesensors 11 und das Temperaturverhalten der Bauteile des elektromotorischen Antriebs hervorgerufen. Dies hat zur Folge, dass das verstärkte Ausgangssignal (ASI) des Integrators 15 der Temperaturdrift des Ausgangssignals (ASLS) des Lagesensors 11 entsprechend ebenfalls eine Abweichung erfährt, was dazu führt, dass der initial bestimmte Arbeitspunkt vom tatsächlichen Arbeitspunkt im stationären Betriebszustand abweicht. Es wird somit eine Abweichung der Lage des Rotors 1 gemessen, die auf Grund der initialen Messung der Extremwerte zu einer Abschaltung des elektromotorischen Antriebs führen kann, die auf einer fehlerhaften Bewertung des Arbeitspunktes beruht.

Auf Grund von Temperaturänderungen, wie sie beim Hochlaufen des elektromotorischen Antriebs bis zum Erreichen der Betriebstemperatur zu verzeichnen sind, tritt eine Drift des Ausgangssignals (ASLS) des Lagesensors 11 auf. Diese Signaldrift wird durch die Temperaturdrift des Lagesensors 11 und des Temperaturverhaltens der Bauteile des elektromotorischen Antriebs hervorgerufen. Die Temperaturdrift und die Veränderungen auf Grund des Temperaturverhaltens der Bauteile des elektromotorischen Antriebs werden durch Veränderung der Pulsweitenmodulation zeitverzögert kompensiert.

Die Verzögerung ist nur geringfügig kürzer, als die auftretende Verzögerung beim Hochlaufen des elektromotorischen Antriebs bis zum Erreichen der Betriebstemperatur. Somit kann davon ausgegangen werden, dass auftretende Prozess- und Störkräfte, die eine erhebliche Beeinflussung des Lagerluftspaltes zur Folge haben, mit einer wesentlich geringeren Verzögerung Einfluss nehmen und somit erkannt werden.

## Patentansprüche

1. Verfahren zum Betreiben eines elektromotorischen Antriebs, insbesondere eines Einzelantriebs einer Textilmaschine, umfassend einen berührungslos gelagerten Rotor (1), Fanglager (10), wobei der Rotor (1) an einem der Fanglager (10) vor Inbetriebnahme des elektromotorischen Antriebs anliegt, und zu denen der Rotor (1) während des stationären Betriebs durch einen Lagerluftspalt beabstandet ist, sowie eine Regeleinrichtung, die es gestattet, den Rotor (1) während des stationären Betriebs in einem kräftefreien Schwebezustand zu halten, in welchem der Rotor (1) axial um einen Arbeitspunkt schwebt,
**gekennzeichnet durch** die folgenden Schritte:
- Einlesen eines von der Regeleinrichtung zur Aufrechterhaltung des kräftefreien Schwebezustands während des Betriebes erzeugten Ausgangssignals (ASI);
- Berechnung des Lagerluftspaltes **durch** Bewertung des Ausgangssignals (ASI);
- Vergleich des berechneten Wertes für den Lagerluftspalt mit vorgebbaren Grenzwerten;
- Abschalten des elektromotorischen Antriebs bei Passieren der Grenzwerte.

2. Verfahren nach Anspruch 1, **dadurch gekennzeichnet, dass** vor dem Anlaufen des elektromotorischen Antriebs zur Festlegung von Grenzwerten die Fanglageranschläge zur Bestimmung der Extremwerte des Lagerluftspaltes vermessen werden.

3. Verfahren nach Anspruch 2, **dadurch gekennzeichnet, dass** die vorgebbaren Grenzwerte unterhalb der bestimmten Extremwerte festgelegt werden.

4. Verfahren nach einem der Ansprüche 1 bis 3, **dadurch gekennzeichnet, dass** nach jeder erfolgten Abschaltung des elektromotorischen Antriebs die Vermessung der Lageranschläge vor dem Wiederanlaufen des elektromotorischen Antriebs durchgeführt wird.

5. Verfahren nach einem der Ansprüche 1 bis 4, **dadurch gekennzeichnet, dass** vor dem Hochlauf des Rotors (1) ein Referenzwert eines Arbeitspunktes des im Schwebezustand befindlichen Rotors (1) festgelegt wird, sodass eine Abweichung eines sich während des stationären Betriebs einstellenden Arbeitspunktes von diesem Referenzwert feststellbar wird.

6. Verfahren nach Anspruch 5, **dadurch gekennzeichnet, dass** der Referenzwert aus dem Mittelwert der Fanglagerabstände bestimmt wird.

7. Verfahren nach Anspruch 5, **dadurch gekennzeichnet, dass** der Referenzwert des Arbeitspunktes des im Schwebezustand befindlichen Rotors (1) neu festgelegt wird, wenn der Rotor (1) seine Betriebsdrehzahl erreicht hat.

8. Verfahren nach einem der Ansprüche 5 bis 7, **dadurch gekennzeichnet, dass** durch eine definierte Abweichung des sich jeweils im stationären Betrieb einstellenden Arbeitspunktes vom Referenzwert die Abschaltung des elektromotorischen Antriebs bewirkt wird.

9. Verfahren nach einem der Ansprüche 1 bis 8, **dadurch gekennzeichnet, dass** das Ausgangssignal (ASI) für kleine Lagerluftspalte linearisiert wird.

10. Verfahren nach einem der Ansprüche 1 bis 9, **dadurch gekennzeichnet, dass** zur Auswertung des Ausgangssignals (ASI) die Regeleinrichtung mit einer Steueranordnung in Wirkverbindung steht.

11. Verfahren nach Anspruch 10, **dadurch gekennzeichnet, dass** zur Verstärkung des Ausgangssignals (ASI) die Steueranordnung einen Differenzverstärker (16) aufweist.

12. Verfahren nach Anspruch 11, **dadurch gekennzeichnet, dass** der Eingang des Differenzverstärkers (16) mit einem zusätzlichen, pulsweitenmodulierten Signal beaufschlagt wird, welches durch die Steueranordnung erzeugt wird:

13. Verfahren nach Anspruch 12, **dadurch gekennzeichnet, dass** zur Kompensation der während des Übergangs des Betriebszustands des elektromotorischen Antriebs vom Zeitpunkt des Hochlaufens bis zum Erreichen des stationären Betriebszustandes auftretenden Abweichungen von der Gleichgewichtslage im Schwebezustand des Rotors (1) die Pulsweitenmodulation des Signals mit zeitlicher Verzögerung verändert wird.

14. Elektromotorischer Antrieb, insbesondere für eine Textilmaschine, zur Durchführung des Verfahrens nach einem der Ansprüche 1 bis 13, **dadurch gekennzeichnet, dass** die Regeleinrichtung einen Lagesensor (11.) mit mindestens einer Sensorspule (7), mindestens eine definiert bestrombare Aktorspule (5), einen Lageregler (12) und einen Integrator (15) umfasst, an dem das Ausgangssignal (ASI) zur Auswertung und Berechnung des Lagerluftspaltes abgreifbar ist.

15. Elektromotorischer Antrieb nach Anspruch 14, **dadurch gekennzeichnet, dass** die Regeleinrichtung mit einer Steueranordnung zur Auswertung des Ausgangssignals (ASI) verbunden ist.

16. Elektromotorischer Antrieb nach Anspruch 15, **dadurch gekennzeichnet, dass** die Steueranordnung eine digitale Steuereinheit (18) umfasst.

17. Elektromotorischer Antrieb nach einem der Ansprüche 15 oder 16, **dadurch gekennzeichnet, dass** die Steueranordnung einen Verstärker (16), einen Analog/Digital-Wandler (17) sowie einen Digital/Analog-Wandler (19) umfasst, über die die Steuereinheit (18), mit der Regeleinrichtung verbindbar ist.

18. Elektromotorischer Antrieb nach einem der Ansprüche 14 bis 17, **dadurch gekennzeichnet, dass** zur berührungslosen Lagerung des Rotors (1) die Lagerung als eine Magnetlageranordnung ausgeführt ist.

19. Elektromotorischer Antrieb nach einem der Ansprüche 14 bis 18, **dadurch gekennzeichnet, dass** zur berührungslosen Lagerung des Rotors (1) die Lagerung als eine Kombination aus einer Magnet- und Gaslageranordnung ausgeführt ist.

20. Elektromotorischer Antrieb nach einem der Ansprüche 14 bis 19, **dadurch gekennzeichnet, dass** der Rotor (1) als Spinnrotor ausgeführt ist..

21. Elektromotorischer Antrieb nach einem der Ansprüche 14 bis 20, **dadurch gekennzeichnet, dass** als Antrieb für eine Rotorspinnmaschine ausgeführt ist.

## Claims

1. Method for operating an electromotive drive, in particular a single drive of a textile machine, comprising a contactlessly mounted rotor (1), catch bearings (10), wherein the rotor (1) bears against one of the catch bearings (10) prior to initial operation of the electromotive drive, and from which the rotor (1) is spaced apart during stationary operation by a bearing air gap, as well as a control device, which allows the rotor (1) to be held in a force-free floating state during stationary operation, **characterised by** the following steps:
- inputting an output signal (ASI) generated by the control device for maintaining the force-free floating state during operation;
- calculating the bearing air gap by evaluating the output signal (ASI);
- comparison of the calculated value for the bearing air gap with predeterminable limit values;
- switching off the electromotive drive when the limit values are passed.

2. Method according to claim 1, **characterised in that** before starting up the electromotive drive to fix limit values the catch bearing stops are measured to determine the extreme values of the bearing air gap.

3. Method according to claim 2, **characterised in that** the predeterminable limit values are determined below the defined extreme values.

4. Method according to one of claims 1 to 3, **characterised in that** after each time the electromotive drive is switched off the measurement of the bearing stops is carried out before the electromotive drive is started up again.

5. Method according to one of claims 1 to 4, **characterised in that** before the start-up of the rotor (1) a reference value of a working point of the rotor (1) in the floating state is determined, so that a deviation of a working point set during stationary operation from this reference value can be determined.

6. Method according to claim 5, **characterised in that** the reference value is determined from the average value of the catch bearing spacings.

7. Method according to claim 5, **characterised in that** the reference value of the working point of the rotor (1) in the floating state is redefined when the rotor (1) has reached its operating speed.

8. Method according to one of claims 5 to 7, **characterised in that** the electromotive drive is switched off by a defined deviation of the working point adjusted in each case in stationary operation from the reference value.

9. Method according to one of claims 1 to 8, **characterised in that** the output signal (ASI) is made linear for small bearing air gaps.

10. Method according to one of claims 1 to 9, **characterised in that** to evaluate the output signal (ASI) the control device is in operative connection with a control arrangement.

11. Method according to claim 10, **characterised in that** to amplify the output signal (ASI) the control arrangement comprises a differential amplifier (16).

12. Method according to claim 11, **characterised in that** the input of the differential amplifier (16) is loaded with an additional pulse width-modulated signal, which is produced by the control arrangement.

13. Method according to claim 12, **characterised in that** to compensate the deviations, which occur during the transition of the operating mode of the electromotive drive from the time of the start-up to the stationary operating mode, from the state of equilibrium in the floating state of the rotor (1) the pulse width modulation of the signal is changed with a time delay.

14. Electromotive drive, in particular for a textile machine, for performing the method according to one of claims 1 to 13, **characterised in that** the control device comprises a position sensor (11) with at least one sensor coil (7), at least one actuator coil (5) which can be provided with electrical energy in a defined manner, a position controller (12) and an integrator (15), at which the output signal (ASI) can be picked up for evaluation and calculation of the bearing air gap.

15. Electromotive drive according to claim 14, **characterised in that** the control device is connected to a control arrangement for the evaluation of the output signal (ASI).

16. Electromotive drive according to claim 15, **characterised in that** the control arrangement comprises a digital control unit (18).

17. Electromotive drive according to either of claims 15 or 16, **characterised in that** the control arrangement comprises an amplifier (16), an analogue/digital converter (17) and a digital/analogue converter (19), by means of which the control unit (18) can be connected to the control device.

18. Electromotive drive according to one of claims 14 to 17, **characterised in that** for the contactless mounting of the rotor (1), the mounting is designed as a magnetic bearing arrangement.

19. Electromotive drive according to one of claims 14 to 18, **characterised in that** for the contactless mounting of the rotor (1) the mounting is designed as a combination of a magnetic and a gas bearing arrangement.

20. Electromotive drive according to one of claims 14 to 19, **characterised in that** the rotor (1) is designed as a spinning rotor.

21. Electromotive drive according to one of claims 14 to 20, **characterised in that** the drive is designed as a drive for a rotor spinning machine.

## Revendications

1. Procédé pour faire fonctionner un entraînement à moteur électrique, en particulier un entraînement individuel d'une machine textile, comprenant un rotor (1) suspendu sans contact, des paliers de capture (10), le rotor (1) étant en appui contre un des paliers de capture (10) avant la mise en service de l'entraînement à moteur électrique, et dont le rotor (1) est séparé par un espace d'air de palier pendant le fonctionnement stationnaire, ainsi qu'un dispositif de régulation qui permet de maintenir le rotor (1) dans un état flottant libre de toute force pendant le fonctionnement stationnaire,
**caractérisé par** les étapes suivantes :
- lecture d'un signal de sortie (ASI) généré par le dispositif de régulation pendant le fonctionnement pour maintenir l'état flottant libre de toute force ;
- calcul de l'espace d'air de palier par évaluation du signal de sortie (ASI) ;
- comparaison de la valeur calculée pour l'espace d'air de palier avec des valeurs limites prescriptibles ;
- coupure de l'entraînement à moteur électrique en cas de franchissement des valeurs limites.

2. Procédé selon la revendication 1, **caractérisé en ce qu'**avant le démarrage de l'entraînement à moteur électrique, pour définir des valeurs limites, les butées de paliers de capture sont mesurées pour déterminer les valeurs extrêmes de l'espace d'air de palier.

3. Procédé selon la revendication 2, **caractérisé en ce que** les valeurs limites prescriptibles sont définies en dessous des valeurs extrêmes déterminées.

4. Procédé selon une des revendications 1 à 3, **caractérisé en ce qu'**après chaque coupure de l'entraînement à moteur électrique, la mesure des butées de paliers est effectuée avant le redémarrage de l'entraînement à moteur électrique.

5. Procédé selon une des revendications 1 à 4, **caractérisé en ce qu'**avant la montée en vitesse du rotor (1), une valeur de référence d'un point de travail du rotor (1) se trouvant à l'état flottant est définie, de sorte qu'un écart entre un point de travail atteint pendant le fonctionnement stationnaire et cette valeur de référence peut être déterminé.

6. Procédé selon la revendication 5, **caractérisé en ce que** la valeur de référence est déterminée à partir de la moyenne des distances de paliers de capture.

7. Procédé selon la revendication 5, **caractérisé en ce que** la valeur de référence du point de travail du rotor (1) se trouvant à l'état flottant (1) est redéfinie quand le rotor (1) a atteint sa vitesse de rotation de fonctionnement.

8. Procédé selon une des revendications 5 à 7, **caractérisé en ce que** la coupure de l'entraînement à moteur électrique est provoquée par un écart défini entre le point de travail atteint en fonctionnement stationnaire et la valeur de référence.

9. Procédé selon une des revendications 1 à 8, **caractérisé en ce que** le signal de sortie (ASI) est linéarisé pour les petits espaces d'air de palier.

10. Procédé selon une des revendications 1 à 9, **caractérisé en ce que** pour évaluer le signal de sortie (ASI), le dispositif de régulation est en liaison fonctionnelle avec un dispositif de commande.

11. Procédé selon la revendication 10, **caractérisé en ce que** le dispositif de commande présente un amplificateur différentiel (16) pour amplifier le signal de sortie (ASI).

12. Procédé selon la revendication 11, **caractérisé en ce qu'**un signal supplémentaire, modulé en largeur d'impulsion, qui est généré par le dispositif de commande, est appliqué à l'entrée de l'amplificateur différentiel (16).

13. Procédé selon la revendication 12, **caractérisé en ce que** pour compenser les écarts par rapport à la position d'équilibre à l'état flottant du rotor (1) qui apparaissent pendant la transition de l'état de fonctionnement de l'entraînement à moteur électrique de l'instant de la montée en vitesse à l'atteinte de l'état de fonctionnement stationnaire, la modulation en largeur d'impulsion du signal est modifiée avec retard dans le temps.

14. Entraînement à moteur électrique, en particulier pour une machine textile, pour réaliser le procédé selon une des revendications 1 à 13, **caractérisé en ce que** le dispositif de régulation comprend un capteur de position (11) avec au moins une bobine de détection (7), au moins une bobine d'actionneur (5) pouvant être excitée de manière définie, un régulateur de position (12) et un intégrateur (15) auquel le signal de sortie (ASI) peut être prélevé pour évaluer et calculer l'espace d'air de palier.

15. Entraînement à moteur électrique selon la revendication 14, **caractérisé en ce que** le dispositif de régulation est relié à un dispositif de commande pour évaluer le signal de sortie (ASI).

16. Entraînement à moteur électrique selon la revendication 15, **caractérisé en ce que** le dispositif de commande comprend une unité de commande numérique (18).

17. Entraînement à moteur électrique selon une des revendications 15 ou 16, **caractérisé en ce que** le dispositif de commande comprend un amplificateur (16), un convertisseur analogique/numérique (17) ainsi qu'un convertisseur numérique/analogique (19) par lesquels l'unité de commande (18) peut être reliée au dispositif de régulation.

18. Entraînement à moteur électrique selon une des revendications 14 à 17, **caractérisé en ce que** pour la suspension sans contact du rotor (1), la suspension est réalisée sous la forme d'un dispositif de suspension magnétique.

19. Entraînement à moteur électrique selon une des revendications 14 à 18, **caractérisé en ce que** pour la suspension sans contact du rotor (1), la suspension est réalisée sous la forme d'une combinaison d'un dispositif de suspension magnétique et gazeuse.

20. Entraînement à moteur électrique selon une des revendications 14 à 19, **caractérisé en ce que** le rotor (1) est réalisé sous la forme d'un rotor de filature.

21. Entraînement à moteur électrique selon une des revendications 14 à 20, **caractérisé en ce qu'**il est réalisé sous la forme d'un entraînement pour un métier à filer à rotor.
